# EUROPÄISCHE PATENTSCHRIFT

(11) **EP 1 312 445 B1**
(45) Veröffentlichungstag und Bekanntmachung des Hinweises auf die Patenterteilung: **03.09.2008**
(21) Anmeldenummer: 01127086.5
(22) Anmeldetag: 14.11.2001
(51) Int. Cl.: B24B 53/075, B24B 53/085, B24B 19/02, B23F 23/12

(54) **Verfahren, Vorrichtung und Software zum Profilschleifen und gleichzeitigen abrichten des Schleifwerkzeuges**
Method, apparatus and software for grinding and at the same time dressing the grinding tool
Procédé, logiciel et dispositif pour dressage d'une meule pendant le meulage

(43) Veröffentlichungstag der Anmeldung: 21.05.2003
(73) Patentinhaber: Klingelnberg AG, 8005 Zürich (CH)
(72) Erfinder: Boucke, Tobias, 8902 Urdorf (CH); Ganahl, Patrick, 8951 Fahrweid (CH); Pellegrino, Fernando, 8193 Eglisau (CH)
(74) Vertreter: OK pat AG

(56) Entgegenhaltungen:
- WO-A-98/02268
- US-A- 4 848 040
- US-A- 5 954 568
- US-A- 6 077 150
- US-B1- 6 302 764
- PATENT ABSTRACTS OF JAPAN vol. 1998, no. 11, 30. September 1998 (1998-09-30) -& JP 10 151523 A (KYUSHU TOSHIBA KIKAI KK), 9. Juni 1998 (1998-06-09)

## Beschreibung

Die Erfindung betrifft ein Verfahren zum Profilschleifen und gleichzeitigen Abrichten des Schleifwerkzeuges nach dem Oberbegriff des Anspruchs 9, sowie ein System zum Durchführen dieses Verfahrens nach dem Oberbegriff des Anspruchs 1. Die Erfindung betrifft des weiteren eine Softwaresteuerung nach dem Oberbegriff des Anspruchs 12 mit der ein solches Verfahren in einem geeigneten System durchgeführt werden kann. Ein Beispiel eines solchen Verfahrens, Systems, bzw. Softwaremoduls ist aus der WO 98 02268 bekannt.

### HINTERGRUND DER ERFINDUNG

Es werden zahlreiche Maschinen angeboten, mit denen man mittels eines Schleifwerkzeuges ein Werkstück bearbeiten kann. Derartige Maschinen werden zum Beispiel zum sogenannten Profil- oder Formschleifen eingesetzt. Typischerweise wird das Schleifwerkzeug durch eine geeignete Maschinensteuerung so entlang des zu bearbeitenden eine geeignete Maschinensteuerung so entlang des zu bearbeitenden Werkstückes bewegt, dass das gewünschte Profil bzw. die gewünscht Form erzeugt wird.

Es sind Profilschleifmaschlnen unterschiedlichster Konfiguration bekannt, bei denen eine rotierende Schleifscheibe zum Einsatz kommt. Teilweise werden Schleifscheiben verwendet, die zumindest annähernd die negative Kontur des zu erzeugenden Profils. In anderen Fällen wiederum wird die Kontur der Schleifscheibe durch eine Durchdringungsrechnung definiert. Bei derartigen Schleifprozessen, wie auch bei andern formgebenden Prozessen, unterliegt das Schleifwerkzeug einer gewissen Abnutzung.

Herkömmliche Maschinen haben aus diesem Grunde eine Abrichtvorrichtung, die zum Aufbereiten des Schleifwerkzeuges eingesetzt wird. Dabei wird der eigentliche Schleifvorgang unterbrochen und das Schleifwerkzeug durch das Abrichtwerkzeug abgerichtet. Bei heutigen Maschinen beträgt die durch das Abrichten verursachte Nebenzeit bis zu 30% der Maschinenlaufzeit. Während dem Abrichten (auch als Konditionieren bekannt) kann eine solche: Maschine nicht produktiv eingesetzt werden. Dadurch reduziert sich die Rentabilität der Maschine. Dies ist besonders bei aufwendigen Maschinen mit entsprechend hohem Investitionsbedarf von Nachteil. Ausserdem reduziert sich der Durchsatz der Maschinen durch die Nebenzeit. WO 98 02268 offenbart eine Profilschleifmaschine, die gleichzeitig schleift und dabei mittels einer Abrichtscheibe abgerichtet werden kann. Es wird aber nicht das Problem behandelt, das dadurch auftritt, dass die Abrichtscheibe die äussere Form der Schleifscheibe verändert. Dadurch entstehen gewisse Variationen des im Werkstück erzeugten Profils.

Es ist eine Aufgabe der vorliegenden Erfindung, ein Verfahren zum Reduzieren der durch das Abrichten verursachten Nebenzeit bereit zu stellen.

Es ist eine Aufgabe der vorliegenden Erfindung, eine Vorrichtung bereit zu stellen, deren durch das Abrichten verursachte Nebenzeit reduziert ist.

Es ist eine weitere Aufgabe der Erfindung eine entsprechende Software bereit zu stellen.

Die Aufgabe wird erfindungsgemäss durch eine Vorrichtung gemäss Anspruch 1, bzw. durch ein Verfahren, das die im Anspruch 9 angegebenen Schritte umfasst, bzw. durch ein in Anspruch 12 gegebenes Softwaremodul gelöst.

Es ist ein Vorteil des erfindungsgemässen Verfahrens, dass der Schleifvorgang zum Abrichten nicht unterbrochen werden muss. Dadurch steht die Maschinen während einer längeren Hauptzeit zur Verfügung, was einen positiven Einfluss auf die Produktivität hat.

Vorteilhafte Ausgestaltungen der erfindungsgemässen Vorrichtung bilden die Gegenstände der Ansprüche 2 bis 9.

Weitere vorteilhafte Ausführungen des erfindungsgemässen Verfahrens sind in den Ansprüchen 11 bis 13 widergegeben.

Vorteilhafte Ausführungen des Softwaremoduls sind den Ansprüchen 15 und 16 zu entnehmen.

Es ist ein Vorteil der Erfindung, dass sie das hochgenaue Bearbeiten von Werkstücken ermöglicht, ohne den Bearbeitungsprozess zum Abrichten unterbrechen zu müssen.

Die Erfindung ist für Profilschleifmaschinen, insbesondere für Verzahnungsmaschinen geeignet. Gemäss Erfindung können z.B. sowohl gerad- als auch schrägverzahnte Zahnräder bearbeitet werden.

Die Erfindung kann vorteilhafterweise in Bearbeitungsmaschinen eingesetzt werden, wie sie in zahlreichen Industrie- und Fertigungsbetrieben zum Einsatz kommen.

### ZEICHNUNGEN

Ausführungsbeispiele der Erfindung werden im Folgenden unter Bezugnahme auf die Zeichnungen näher beschrieben. Es zeigen:
- **FIG. 1**: eine erste Ausführungsform gemäss der vorliegenden Erfindung;
- **FIG. 2A**: eine schematische Seitenansicht der ersten Ausführungsform;
- **FIG. 2B**: eine schematische Draufsicht der ersten Ausführungsform;
- **FIG. 2C**: eine schematische Darstellung, in der die Bearbeitungszone und die Abrichtzone, gemäss Erfindung, erkennbar sind;
- **FIG. 3**: eine schematische Teilansicht einer zweiten Ausführungsform gemäss der vorliegenden Erfindung;
- **FIG. 4**: eine schematische Teilansicht einer dritten Ausführungsform gemäss der vorliegenden Erfindung;
- **FIG. 5**: eine vierte Ausführungsform gemäss der vorliegenden Erfindung;
- **FIG. 6**: eine erste Ausführungsform einer Software gemäss der vorliegenden Erfindung;
- **FIG. 7**: eine zweite Ausführungsform einer Software gemäss der vorliegenden Erfindung;
- **FIG. 8**: eine erste Ausführungsform einer Schleifscheibe gemäss der vorliegenden Erfindung;
- **FIG. 9A**: eine erste Ausführungsform einer Abrichtscheibe gemäss der vorliegenden Erfindung;
- **FIG. 9B**: eine zweite Ausführungsform einer Abrichtscheibe gemäss der vorliegenden Erfindung;
- **FIG. 10A**: ein beispielhaftes Diagram zur Darstellung der Umfangsgeschwindigkeit einer Schleifscheibe in Abhängigkeit des Schleifscheibendurchmessers und der Drehgeschwindigkeit der Schleifscheibenspindel, gemäss der vorliegenden Erfindung;
- **FIG. 10B**: ein beispielhaftes Diagram zur Darstellung der Umfangsgeschwindigkeit einer Abrichtscheibe in Abhängigkeit des Abrichtscheibendurchmessers und der Drehgeschwindigkeit der Abrichtscheibenspindel, gemäss der vorliegenden Erfindung.

### DETAILIERTE BESCHREIBUNG

Der Einfachheit halber ist in der nachfolgenden Beschreibung hauptsächlich von der profil- bzw. formgebenden Bearbeitung von Zahnrädern die Rede. Die Erfindung ist jedoch auch auf profil- bzw. formgebenden Bearbeitung von anderen Werkstücken anwendbar. Die Begriffe formgebend und profilgebend werden hierin als Synonyme betrachtet.

Gemäss Erfindung dient eine Schleifscheibe als Schleifwerkzeug. Die Schleifscheibe kann zum Beispiel ungefähr die negative Kontur des herzustellenden Profils (eine derartige Schleifscheibe wird auch Formschleifscheibe genannt), oder die Kontur der Schleifscheibe wird durch eine Durchdringungsrechnung ermittelt und definiert. Es können im Zusammenhang mit der vorliegenden Erfindung alle Arten von abrichtbaren Schleifscheiben zum formgebenden Bearbeiten eines Werkstückes eingesetzt werden. Besonders geeignet sind abrichtbare Schleifscheiben wie Edelkorundschleifscheiben, Siliziumkarbidscheiben und keramische Schleifscheiben.

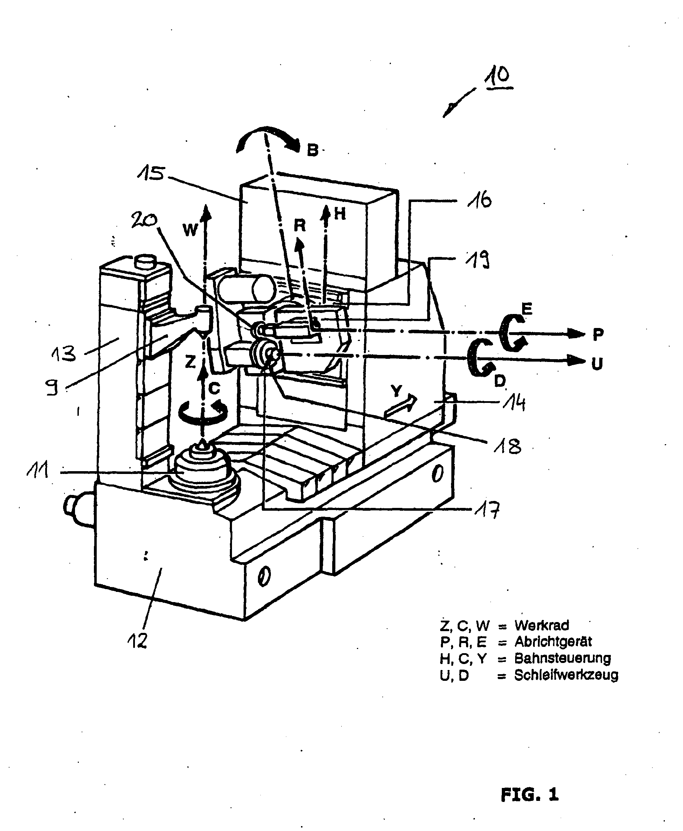

Ein erstes erfindungsgemässes System 10 zur Bearbeitung von Werkstücken ist in Figur 1 gezeigt. Das gezeigten System 10 umfasst ein Maschinenbett 12. Das zu bearbeitende Werkstück (nicht gezeigt) wird auf einem Rundtisch 11 hydrostatisch gelagert. Der Rundtisch 11 wird über einen Antrieb bewegt. Optional ist das Maschinenbett mit einem Gegenhalter 13 (auch Gegenständer genannt) versehen, um das Werkstück besser auf dem Rundtisch fixieren zu können. Zu diesem Zweck ist der Gegenhalter 13 mit einer Pinole 9 bestückt. Auf dem Maschinenbett 12 ist ein Ständer 14 hydrostatisch gelagert. Der Ständer 14 kann durch einen Antrieb in Y-Richtung bewegt werden. Der Ständer 14 trägt einen Vorschubschlitten 15 mit einer Schwenkeinrichtung 16. An der Schwenkeinrichtung 16 ist eine Schleifspindel 17 mit einer Schleifscheibe 18 befestigt. Die Schleifscheibe 18 kann über einen Antrieb in eine Rotation D versetzt werden. Dabei rotiert sie um die Rotationsachse U. Die Schwenkeinrichtung 16 trägt auch ein Abrichtgerät 19 mit einer Abrichtscheibe 20. Die Abrichtscheibe 20 kann über einen Antrieb in eine Rotation E versetzt werden. Dabei rotiert sie um die Rotationsachse P.

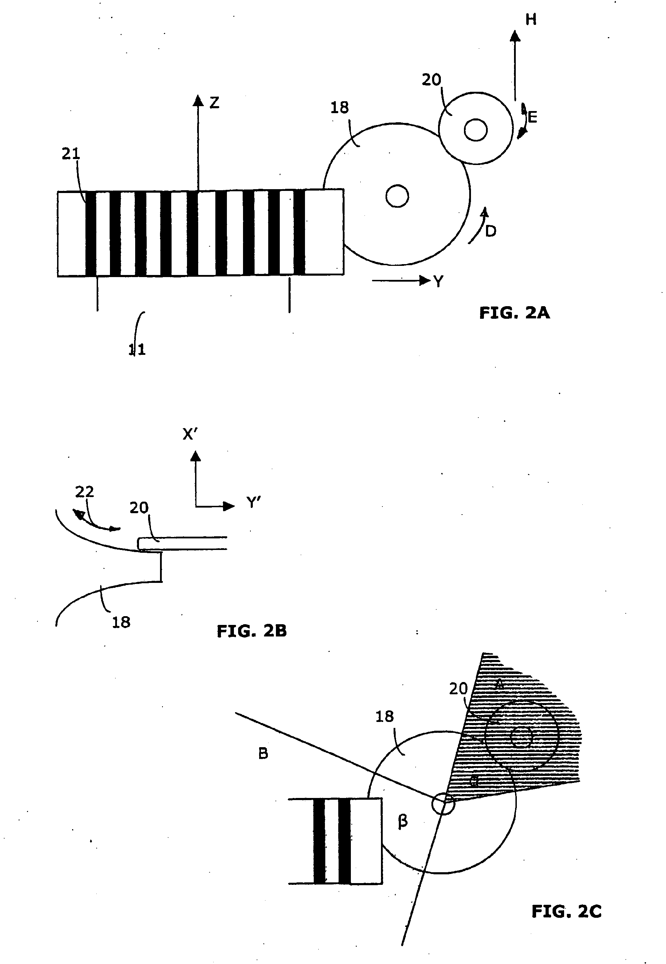

In den Figuren 2A und 2B sind in einer stark schematisierten Darstellung Details des Systems 10 gezeigt. In Figur 2A ist gezeigt, wie die Schleifscheibe 18 seitlich in das zu bearbeitende Werkstück 21 eingreift. Bei dem Werkstück handelt es sich, wie angedeutet, um ein aussenverzahntes Zahnrad, das auf dem Rundtisch 11 gelagert ist. Die Schleifscheibe 18 rotiert in Richtung des Pfeils D. Auf einer dem Werkstück 21 abgewandten Seite wird die Schleifscheibe 18 zeitgleich abgerichtet. Zu diesem Zweck wird die Abrichtscheibe 20 in eine Rotationsbewegung (siehe Pfeil E) versetzt und durch einen geeigneten Antrieb mit softwareunterstützter Steuerung (z.B. einer NC-Steuerung) entlang der Kontur der Schleifscheibe 18 geführt. In Figur 2B ist eine schematische Draufsicht der Schleifscheibe 18 und der Abrichtscheibe 20 gezeigt. Die Abrichtscheibe 20 kann entlang der Achsen X' und Y' bewegt werden. Dadurch kann bei geeigneter Ansteuerung die Kontur der profilierten Schleifscheibe 18 nachgefahren werden, wie durch den Pfeil 22 angedeutet. Durch den Abrichtvorgang kann die Schleiffähigkeit der Schleifscheibe 18 verbessert und deren Kontur neu definiert bzw. wiederhergestellt werden.

Bei dem erfindungsgemässen Verfahren wird zumindest zeitweise gleichzeitig formgebend geschliffen und die Schleifscheibe 18 abgerichtet. Beim Abrichten wird mittels der Abrichtscheibe 20 Material von der Schleifscheibe 18 abgetragen. Während dem Abtragen durch die Abrichtscheibe 20 rotiert die Schleifscheibe 18, um dann an einer anderen Seite (z.B. an der gegenüberliegenden Seite) in das Werkstück 21 einzugreifen und dieses zu profilieren. Wenn die Abrichtscheibe 20 die äussere Form der Schleifscheibe 18 minimal verändert, so wird eine solche Änderung unmittelbar auch in das Werkstück 21 übertragen. Dadurch entstehen gewisse Variationen des im Werkstück 21 erzeugten Profils. Erst wenn ein kompletter Abrichtvorgang beendet ist, kann man für eine gewisse Zeit davon ausgehen, dass die Schleifscheibe 18 das angestrebte Profil aufweist.

Gemäss Erfindung wird ein Korrekturvorgang ausgeführt, um die während dem Abrichtvorgang erzeugten Variationen am Werkstück 21 zu reduzieren oder gänzlich zu eliminieren. Es gibt mindestens drei unterschiedliche Ansätze (abschliessende Korrektur, intermittierende Korrektur, oder zeitgleiche Korrektur) für die Durchführung des erfindungsgemässen Korrekturverfahrens.

Die einfachste Ausführung des Korrekturverfahrens basiert auf einem abschliessenden Korrekturdurchlauf, bei dem das gesamte Profil des Werkstücks 21 nachgefahren wird. Dabei werden die Variationen im Profil beseitigt. Es empfiehlt sich diesen abschliessenden Korrekturdurchlauf entweder mit einer neuen Schleifscheibe 18 durchzuführen, oder eine gerade frisch abgerichtet Schleifscheibe zu verwenden.

Ein weiteres Korrekturverfahren - intermittierende Korrektur genannt - ist in mehrere Korrektursequenzen unterteilt. Dabei wird durch dass System 10 Information gespeichert, mittels der man die Profilabschnitte (zum Beispiel die Zähne eines Zahnrades) später wieder identifizieren kann, deren Profil hergestellt wurde während der Abrichtvorgang ablief. Bei diesen Profilabschnitten kann man davon ausgehen, dass es durch das Abtragen von Material während dem Abrichten zu Variationen des Werkstückprofils gekommen ist. Nachdem die Schleifscheibe 18 frisch abgerichtet worden ist, können die entsprechend vorgemerkten (im System 10 gespeicherten) Profilabschnitte erneut angefahren und nachprofiliert werden. Zu diesem Zweck kann das System mit einem Speichermittel, z.B. einem Halbleiterspeicher oder einer Harddisk, ausgestattet sein.

Bei dem zeitgleichen Korrekturverfahren kommen Berechnungsalgorithmen zur Anwendung, um die durch das Abrichten verursachten Profilvariationen am Werkstück durch eine entsprechende Ansteuerung und Veränderung der Relativbewegung der Schleifscheibe 18 in Bezug auf das zu profilierende Werkstück 21 zu erzielen. Durch die geänderte Relativbewegung können die durch das während dem Abrichten veränderte Form der Schleifscheibe verursachten Variationen kompensiert werden. Neben oder zusätzlich zu dem rein rechnerischen Korrekturverfahren können auch Sensoren, z.B. in Form einer hochauflösenden CCD Kamera, eingesetzt werden. Mittels solcher Sensoren kann man Variationen am Profil des Werkstücks 21 erkennen und gegebenenfalls nach bearbeiten. Es ist auch möglich nachträglich Messungen in einer separaten oder in einer integrierten Messeinrichtung durchzuführen, um dann gegebenenfalls Korrekturmassnahmen einzuleiten.

Es ist auch eine Kombination der drei Korrekturverfahren denkbar.

Zusätzlich zu den beschriebenen Korrekturverfahren ist es möglich eine Korrektur vorzunehmen, die der Tatsache Rechnung trägt, dass es durch das Abrichten zu einer Krafteinwirkung auf die Schleifscheibe 18 kommt. Durch den Anpressdruck der Abrichtscheibe 20 kann es unter Umständen zu einem leichten Versatz der Schleifscheibe 18 oder zu einem leichten Winkelfehler in der Bearbeitung des Werkstückes 21 kommen. Derartige Bearbeitungsungenauigkeiten können rechnerisch ermittelt und durch eine geeignete Korrektur des Bewegungsablaufes der Schleifscheibe 18 entlang des Werkstücks 21 kompensiert werden. Hierzu kann ein entsprechendes Softwaremodul zum Einsatz kommen.

Durch die spezielle Anordnung der verschiedenen beweglichen Komponenten des Systems 10, kann die rotierende Schleifscheibe 18 eine Relativbewegung in Bezug auf das zu bearbeitende Werkstück 21 ausführen, um einen Profilschleifvorgang durchzuführen. Zeitgleich kann das Abrichtgerät 19 eine Relativbewegung der Abrichtscheibe 20 bezüglich der Schleifscheibe 18 vollziehen, um mit der Abrichtscheibe 20 an der Schleifscheibe 18 einen Abrichtvorgang durchzuführen. Wichtig ist, dass das Abrichtgerät 19 räumlich so angeordnet ist, dass es den eigentlichen Profilschleifvorgang nicht stört. Idealerweise erfolgt das Abrichten an einer Seite der Schleifscheibe 18, die von dem Punkt abgewandt ist, an dem die Schleifscheibe 18 zur Formgebung in das Werkstück 21 eingreift. Es wird für die Schleifscheibe 18 eine sogenannte Abrichtzone A und eine Bearbeitungszone B definiert, wie zum Beispiel in Figur 2C gezeigt. Gemäss Erfindung umspannt die Bearbeitungszone B typischerweise einen Winkelbereich β in Bezug auf die Schleifscheibe 18 zwischen 30 Grad und 180 Grad. Die Abrichtzone A umfasst typischerweise einen Winkelbereich a zwischen 20 Grad und 90 Grad. Wichtig ist, dass die Abrichtzone A nicht mit der Bearbeitungszone B überlappt.

Vorzugsweise ist das Abrichtgerät 19 so ausgebildet, das es sich solidarisch mit der Schleifscheibe 18 in Bezug auf das zu bearbeitende Werkstück bewegen lässt. Mit anderen Worten, die Position des Abrichtgerätes in Bezug auf die Schleifscheibe bleibt im Wesentlichen erhalten. Zusätzlich muss jedoch das Abrichtgerät 19 in der Lage sein eine Relativbewegung der Abrichtscheibe 20 entlang der Kontur der Schleifscheibe 18 auszuführen. Idealerweise weist das Abrichtgerät zu diesem Zweck eine 2-achsige Bewegungseinheit (z.B. in Form eines Kreuzschlittens, der z.B. durch einen NC-Servoantrieb realisiert sein kann) auf.

Ein weiterer wichtiger Punkt ist der folgende. Es ist zu beachten, dass der Abrichtvorgang so ausführbar sein muss, dass das Abrichten alleine durch die Bewegung der Abrichtscheibe 20 in Bezug auf die Schleifscheibe 18 ausgeführt wird. Konventionelle Abrichtprozesse, bei denen die Neigung der Schleifscheibe 18 während dem Abrichten geändert werden muss, sind nicht geeignet, da sich gemäss Erfindung die Schleifscheibe 18 gleichzeitig im Eingriff mit dem zu bearbeitenden Werkstück 21 befindet. Ein Neigen der Schleifscheibe 18 würde zu unerwünschten Abweichungen im zu erzeigenden Profil führen.

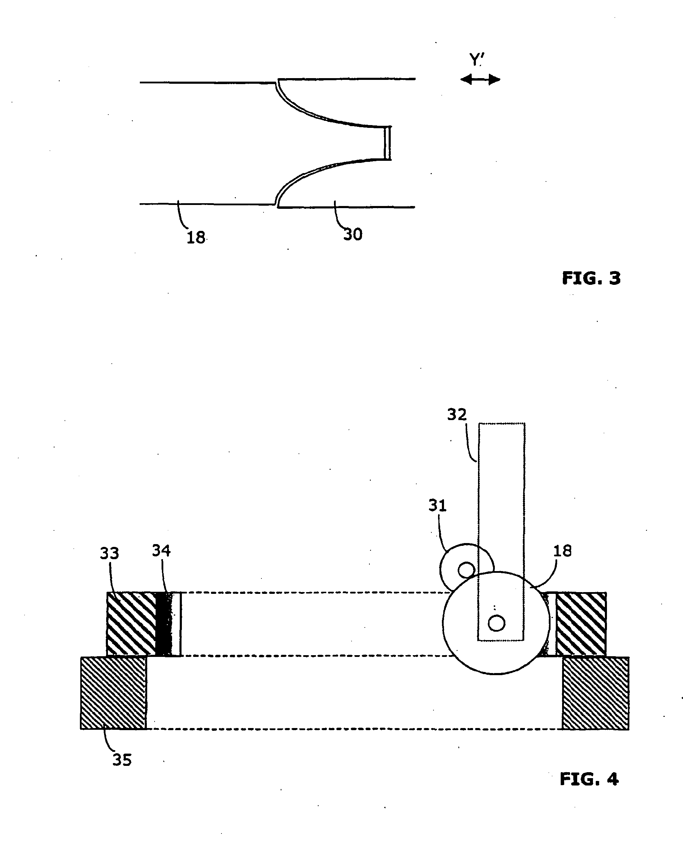

In einer weiteren Ausführungsform der Erfindung kommt ein sogenannter Formabrichter 30 zum Einsatz. Der Formabrichter 30 ist ein Werkzeug, das (zumindest annähernd) die negative Form des Schleifwerkzeuges 18 nachbildet, wie in Figur 3 schematisch dargestellt. Die Schleifscheibe 18 und der Formabrichter 30 sind so zueinander angeordnet, dass sich beide in einer Ebene befinden, die der Symmetrieebene der beiden Scheiben 18 und 30 entspricht und die senkrecht zu den Rotationsachsen der Scheiben 18 und 30 liegt. Bei der gezeigten Ausführungsform ist die Realisierung des Abrichtgerätes einfacher, da nur eine Bewegung parallel zur Y'-Achse notwendig ist. Vorzugsweise rotiert nicht nur die Schleifscheibe 18 sondern auch der Formabrichter 30.

Bei einer weiteren Ausführungsform kommen zwei Abrichtscheiben zum Einsatz. Die beiden Abrichtscheiben können entweder identisch sein, um ein beidseitiges und gleichzeitiges Abrichten der Schleifscheibe 18 zu ermöglichen. Bei diesem Abrichtvorgang befindet sich die Schleifscheibe 18 zum Teil zwischen den beiden Abrichtscheiben. In einer modifizierten Ausführungsform ist das Abrichtgerät mit zwei unterschiedlichen Abrichtscheiben bestückt. Damit kann man was das Abrichten anbelangt zusätzliche Flexibilität erzielen. Ein erster Abrichtschritt kann mit einer ersten der beiden Scheiben durchgeführt werden. Dann folgt ein zweiter Abrichtschritt, um zum Beispiel eine Nachbearbeitung zu ermöglichen. Man kann aber auch abwechselnd die beiden Abrichtscheiben einsetzen, um komplizierte Profile (wie z.B. Kavitäten oder Radiusänderungen im Bereich von Flanken) besser herausarbeiten zu können.

Eine weitere Ausführungsform ist schematisch in Figur 4 gezeigt. Die gezeigten Komponenten sind Bestandteil eines Systems zum profilgebenden Bearbeiten von Werkstücken. In dem gezeigten Ausschnitt ist das Werkstück 33 im Schnitt gezeigt. Es handelt sich um ein ringförmiges Werkstück 33, das auf der Innenseite mit Zähnen 34 versehen wird. Das Werkstück 33 ruht auf einer ringförmigen Auflage 35, die wiederum an dem Rundtisch 11 (nicht in Figur 4 gezeigt) befestigt ist. Von oben wird eine Schleifscheibe 18 in die innere Öffnung des Werkstücks 33 eingeführt, um mit einer geeigneten Relativbewegung das gewünschte Profil der Innenverzahnung zu erzeugen. Der Schleifvorgang ist vergleichbar mit dem Schleifvorgang zum Erzeugen einer Aussenverzahnung. Zu diesem Zweck ist die Schleifscheibe 18 über einen Arm 32 aufgehängt. Dieser Arm 32 ist stark schematisiert dargestellt. Idealerweise ist der Arm 32 auf einem Schlitten und das Werkstück 33 drehbar gelagert, um die für das Erzeugen des Profils notwendige Relativbewegung zwischen der Schleifscheibe 18 und dem Werkstück 33 zu erzeugen. Zusätzlich ist ein Abrichtgerät mit einer Abrichtscheibe 31 im Bereich der Schleifscheibe 18 angeordnet. Die Abrichtscheibe 31 bewegt sich solidarisch mit der Schleifscheibe 18 innerhalb der Öffnung des Werkstückes 33. Zusätzlich ist die Abrichtscheibe 31 derart bewegbar, das eine für das Abrichten notwendige Relativbewegung zwischen der Abrichtscheibe 31 und der Schleifscheibe 18 ermöglicht wird.

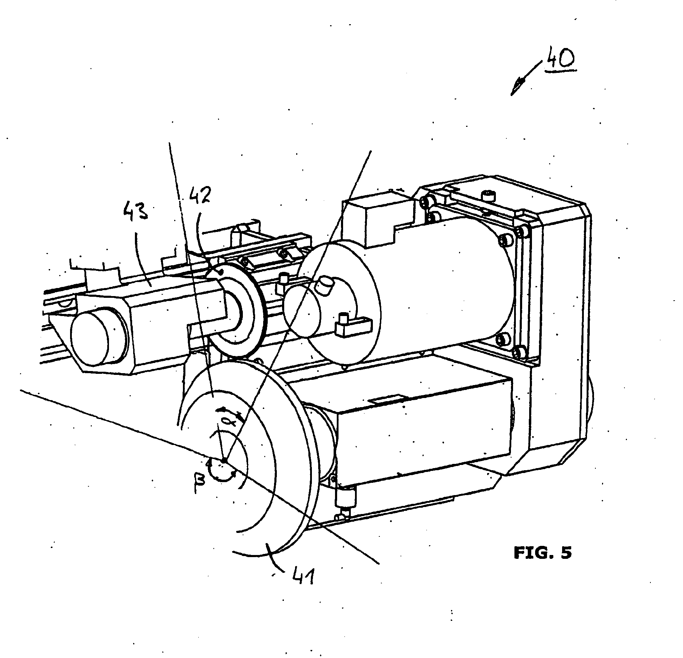

Ein weiteres System 40, gemäss Erfindung, ist ausschnittsweise in Figur 5 gezeigt. Bei dem gezeigten System 40 sitzt das Abrichtgerät 43 mit der Abrichtscheibe 42 oberhalb der Schleifscheibe 41. Der Antrieb und die Aufhängung der Abrichtscheibe befinden sich linker Hand, wohingegen der Antrieb und die Aufhängung der Schleifscheibe 41 auf der rechten Seite angeordnet sind. Durch diese gegenseitig versetzte Anordnung kann man zusätzlichen Raum gewinnen. In dem gezeigten Beispiel ist die durch den Winkel a definierte Abrichtzone A wesentlich kleiner als die durch den Winkel β definierte Bearbeitungszone B. Die beiden Zonen A und B überlappen nicht. Während die Schleifscheibe 41 im Bereich der Bearbeitungszone in ein zu bearbeitendes Werkstück (nicht gezeigt) eingreift, kann im Bereich der Abrichtzone der Abrichtvorgang ablaufen.

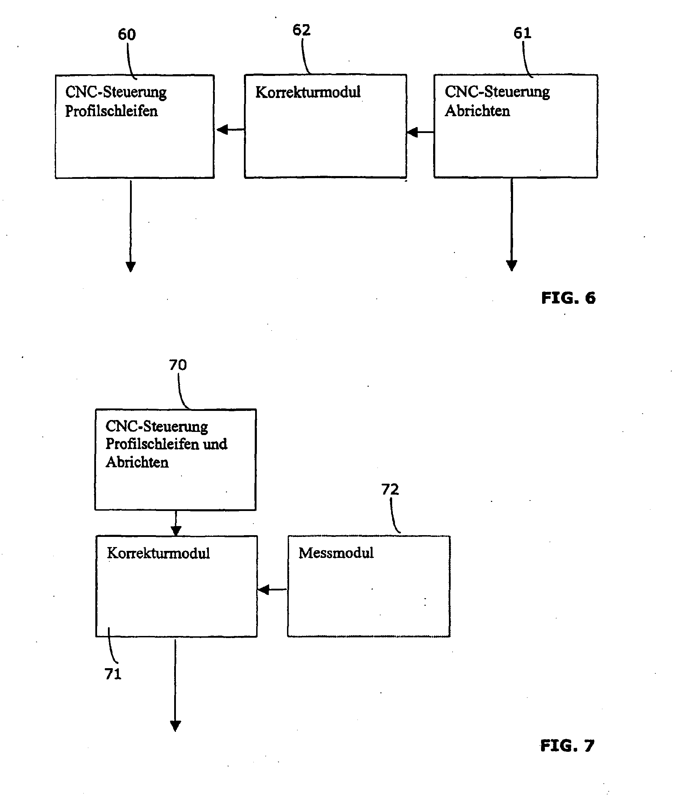

Vorzugsweise umfasst das System eine CNC-Steuerung, die das Abrichtgerät ansteuert und dadurch die Abrichtscheibe während des Abrichtvorgangs entsprechend entlang der Schleifscheibe bewegt. Eine erste beispielhafte Softwaresteuerung ist in Figur 6 als Blockdiagram gezeigt. Die Steuerung umfasst eine CNC-Steuerung 60, welche den eigentlichen Schleifvorgang steuert, und eine CNC-Steuerung 61 zu Steuern des Abrichtgerätes. Zusätzlich umfasst die Steuerung ein Korrekturmodul 62, das sowohl mit der CNC-Steuerung 60 als auch der CNC-Steuerung 61 in Verbindung steht. Das Korrekturmodul 62 ermittelt während dem Abrichten, ob und wo Variationen am Profil des Werkstückes entstanden sind. Um eine Nachbearbeitung oder Korrektur zu ermöglichen, liefert das Korrekturmodul 62 der CNC-Steuerung 60 Korrekturinformation.

In Figur 7 ist eine weitere Steuerung, gemäss Erfindung, gezeigt. In dem dargestellten Beispiel kommt eine einzige CNC-Steuerung 70 zur Anwendung, die sowohl den Schleifvorgang als auch den Abrichtvorgang kontrolliert und steuert. In dem gezeigten Beispiel ist ein Korrekturmodul 71 nachgeschaltet, das für die Durchführung von Korrekturmassnahmen ausgelegt ist. Optional kann ein Messmodul 72 zur Anwendung kommen, das Messwerte an das Korrekturmodul 71 übergibt.

Die Steuerung des Abrichtgerätes kann mit einem Softwaremodule erweitert oder ergänzt werden, das die beschriebenen Korrekturmassnahmen durchführt. Bei einer besonderen Ausführungsform der Erfindung kann das Softwaremodul dem Benutzer eine Auswahlmöglichkeit zum Auswählen einer oder mehrerer Korrekturverfahren anbieten. Dies wird vorzugsweise durch ein grafisches Benutzerinterface (GUI) auf einem Bildschirm realisiert. Dadurch kann der Benutzer des Systems den Ablauf individuell gestalten. Das Softwaremodul steht sowohl mit der Steuerung des Abrichtgerätes als auch mit der Steuerung der Schleifscheibe in Verbindung (wie in den Figuren 6 und 7 gezeigt), um eine Korrelation der für das Korrekturverfahren notwendigen Information zu ermöglichen.

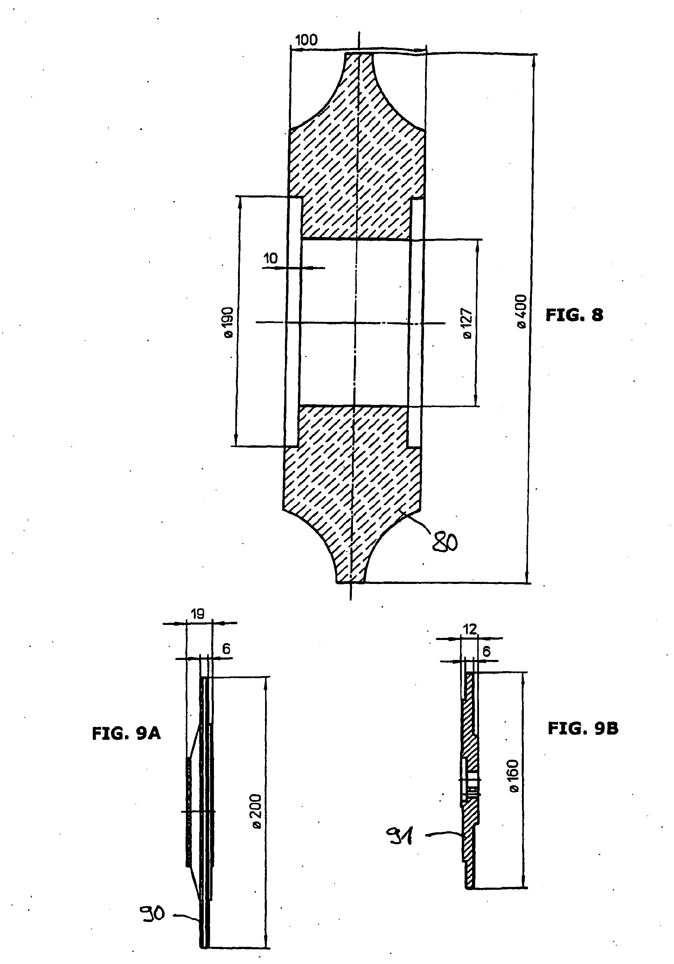

Vorzugsweise handelt es sich bei der Abrichtscheibe um eine Scheibe, deren Durchmesser geringer ist als der Durchmesser der Schleifscheibe. Zwei beispielhafte Abrichtscheiben 90 und 91 sind in den Figuren 9A und 9B gezeigt. Die Abrichtscheibe kann einen Durchmesser zwischen 10mm und 300mm, vorzugsweise zwischen 50mm und 200mm. Typischerweise hat die Schleifscheibe einen Durchmesser zwischen 50mm und 500mm, vorzugsweise zwischen 180mm und 400mm. Eine beispielhafte Schleifscheibe 80 ist in Figur 8 gezeigt. Die gezeigte Scheibe 80 hat eine Durchmesser von 400mm. Des weiteren hat die Abrichtscheibe üblicherweise einen geringeren Krümmungsradius am äusseren Umfang. Auch ist die Abrichtscheibe typischerweise dünner als die Schleifscheibe. Die Dicke der Abrichtscheibe liegt typischerweise zwischen 5mm und 20mm, wohingegen die Dicke der Schleifscheibe zwischen 8mm und 100mm liegen kann.

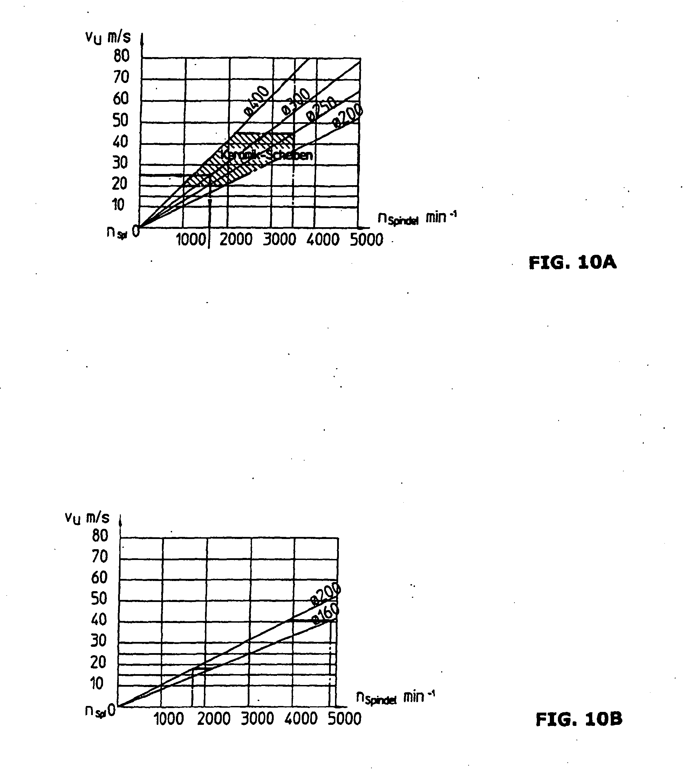

In einer bevorzugten Ausführungsform dreht sich die Schleifscheibe mit einer Drehgeschwindigkeit, die einer Umfangsgeschwindigkeit vᵤ zwischen 0 und 80 m/s entspricht. Vorzugsweise liegt die Umfangsgeschwindigkeit vᵤ zwischen 20 und 50 m/s. In Figur 10A ist ein beispielhaftes Diagram zur Darstellung der Umfangsgeschwindigkeit vᵤ einer Schleifscheibe in Abhängigkeit des Schleifscheibendurchmessers (200mm, 250mm, 300mm, 400mm) und der Drehgeschwindigkeit n_{Spindel} der Schleifspindel, gemäss der vorliegenden Erfindung, gezeigt. Figur 10B zeigt in einem beispielhaften Diagram die Umfangsgeschwindigkeit einer Abrichtscheibe in Abhängigkeit des Abrichtscheibendurchmessers (160mm oder 200mm) und der Drehgeschwindigkeit der Abrichtspindel n_{Spindel}, gemäss der vorliegenden Erfindung. In einer beispielhaften Ausführungsform dreht sich die Abrichtscheibe mit einer Drehgeschwindigkeit, die einer Umfangsgeschwindigkeit vᵤ zwischen 0 und 53 m/s entspricht. Vorzugsweise liegt die Umfangsgeschwindigkeit vᵤ der Abrichtscheibe zwischen 80 und 95% der Umfangsgeschwindigkeit vᵤ der Schleifscheibe. Die Schleifscheibe und Abrichtscheibe können in die gleiche Richtung oder in entgegengesetzte Richtung angetrieben werden, wobei es letztendlich jeweils auf die Relativbewegung zwischen der Abrichtscheibe und der Schleifscheibe ankommt.

Der Abrichtvorgang gemäss Erfindung kann zwischen 20 Sekunden und 5 Minuten dauern. Vorzugsweise benötigt der Abrichtvorgang zwischen 1 Minute und 1,5 Minuten. Es ist aber auch denkbar, das man während dem Schleifen permanent abrichtet.

Es können sowohl mechanische als auch elektrische Massnahmen, z.B. mittels geeigneter Sensoren, getroffen werden, um zu verhindern, dass die Abrichtscheibe in die Bearbeitungszone einfährt.

Die Erfindung kann auch auf Systeme mit anderen Achskonfigurationen angewendet werden, wobei zu beachten ist, dass die räumlich Aufteilung und Anordnung es zulässt die Abrichtscheibe einzusetzen während das Werkstück sich in Bearbeitung durch die Schleifscheibe befindet.

In einer weiteren Ausführungsform ist das Abrichtgerät so ausgeführt, dass es in kritischen Situationen oder bei relativ beengten Bearbeitungssituationen, zum Beispiel im Inneren eines zu bearbeitenden Werkstückes, durch eine Kipp- oder Verschiebungsbewegung aus dem Bereich der Schleifscheibe wegbewegt werden kann. Durch eine solche Ausführungsform gewinnt man weitere Flexibilität was das Einsatzgebiet des gesamten System betrifft.

Gemäss Erfindung muss die Schleifscheibe nicht in eine spezielle Abrichtposition gefahren werden, um dort den Abrichtvorgang durchführen zu können. Es ein Vorteil der Erfindung, dass man durch das gleichzeitig profilgebende Bearbeiten und Abrichten die Totzeiten reduzieren oder eliminieren kann.

## Patentansprüche

1. System (10; 40) zum Profilschleifen mit einer Schleifspindel zum drehbaren Lagern einer Schleifscheibe (18; 41; 80; 80), einer Vorrichtung zum Lagern eines Abrichtwerkzeuges (20; 30; 42; 90; 91) und mit einer Halterung (11; 35) zur Aufnahme und zum Fixieren eines zu bearbeitenden Werkstückes (21; 33), wobei das System (10; 40) Mittel aufweist, um eine Relativbewegung der Schleifscheibe (18; 41; 80) bezüglich des zu bearbeitenden Werkstückes (21; 33) zu ermöglichen, um mit der Schleifscheibe (18; 41; 80) an dem Werkstück (21; 33) einen Profilschleifvorgang durchführen zu können, wobei das System (10; 40) zusätzliche Mittel aufweist, um eine Relativbewegung des Abrichtwerkzeugs (20; 30; 42; 90; 91) bezüglich der Schleifscheibe (18; 41; 80) zu ermöglichen, um zeitgleich zu dem Profilschleifvorgang mit dem Abrichtwerkzeug (20; 30; 42; 90; 91) an der Schleifscheibe (18; 41; 80) einen Abrichtvorgang durchführen zu können, **dadurch gekennzeichnet, dass** das System (10; 40) ein Softwaremodul (62; 71) umfasst, um ein oder mehrere Korrekturverfahren durchführen zu können, um die während der Schleifbearbeitung und dem gleichzeitigen Abrichtvorgang erzeugten Profilungenauigkeiten am Werkstück (21; 31) zu reduzieren oder gänzlich zu eliminieren.

2. Das System (10; 40) nach Anspruch 1, wobei die Vorrichtung zum Lagern einen Schlitten, vorzugsweise einen 2-achsigen Schlitten, und/oder eine Abrichtspindel umfasst.

3. Das System (10; 40) nach Anspruch 1 oder 2, wobei die Relativbewegung des Abrichtwerkzeugs (20; 30; 42; 90; 91) bezüglich der Schleifscheibe (18; 41; 80) so ausgeführt wird, dass während dem Abrichtvorgang die Schleiffähigkeit der Schleifscheibe (18; 41; 80) verbessert wird.

4. Das System (10; 40) nach Anspruch 2, wobei als Abrichtwerkzeug (20; 42) eine Abrichtscheibe dient, die mindestens während des Abrichtvorganges über die Abrichtspindel in Rotation versetzbar ist.

5. Das System (10; 40) nach Anspruch 1, 2 oder 4, wobei das System (10; 40) eine softwareunterstützte Abrichtsteuerung (61; 70) umfasst, welche die Relativbewegung des Abrichtwerkzeugs (20; 30; 42; 90; 91) bezüglich der Schleifscheibe (18; 41; 80) steuert.

6. Das System (10; 40) nach einem der vorhergehenden Ansprüche, wobei die Schleifscheibe (18; 41; 80) eine Innen- und/oder Aussenbearbeitung des zu bearbeitenden Werkstückes (21; 33) ermöglicht.

7. Profilschleifsystem zum Bearbeiten von Aussen- und/oder Innenverzahnungen, **dadurch gekennzeichnet, dass** es ein System (10; 40) gemäss einem der Ansprüche 1 - 5 umfasst.

8. Das Profilschleifsystem nach Anspruch 7, **dadurch gekennzeichnet, dass** es zum Formschleifen von Zahnrädern und/oder Schnecken ausgelegt ist.

9. Verfahren zum Profilschleifen mit den folgenden Schritten:
- Antreiben einer Schleifscheibe (18; 41; 80), um diese in eine Rotationsbewegung zu versetzen,
- Verschieben der Schleifscheibe (18; 41; 80) in Bezug auf ein zu bearbeitendes Werkstück (21; 33), um die Schleifscheibe (18; 41; 80) mit dem Werkstück (21; 33) in Kontakt zu bringen,
- Steuern der relativen Bewegung der Schleifscheibe (18; 41; 80) in Bezug auf das Werkstück (21; 33), um ein Profilschleifvorgang auszuführen,
- Antreiben einer Abrichtscheibe (20; 30; 42; 90; 91), um diese in eine Rotationsbewegung zu versetzen,
- Verschieben der Abrichtscheibe (20; 30; 42; 90; 91) in Bezug auf die Schleifscheibe (18; 41; 80), um die Abrichtscheibe (20; 30; 42; 90; 91) mit der Schleifscheibe (18; 41; 80) in Kontakt zu bringen,
- Steuern der relativen Bewegung der Abrichtscheibe (20; 30; 42; 90; 91) in Bezug auf die Schleifscheibe (18; 41; 80), um während dem Profilschleifvorgang einen Abrichtvorgang auszuführen, **gekennzeichnet durch** das
- eine Korrekturverfahren durchgeführt wird, um Profilungenauigkeiten am Profil des Werkstückes (21; 33) zu beheben, die während dem Abrichtvorgang entstanden sind.

10. Das Verfahren nach Anspruch 9, wobei mindestens eines der folgenden Korrekturverfahren durchgeführt wird:
- abschliessende Korrektur, die am Ende des Profilschleifvorgangs ausgeführt wird,
- intermittierende Korrektur, die schrittweise zu verschiedenen Zeitpunkten während des Profilschleifvorganges ausgeführt wird,
- zeitgleiche Korrektur, die während dem Abrichtvorgang ausgeführt wird.

11. Das Verfahren nach Anspruch 9 oder 10, wobei durch den Abrichtvorgang die Schleiffähigkeit der Schleifscheibe (18; 41; 80) verbessert wird.

12. Softwaremodul zur Verwendung in einem oder mit einem System (10; 40) zum Profilschleifen, wobei das System (10; 40)
- eine drehbare Schleifscheibe (18; 41; 80),
- eine drehbare Abrichtscheibe (20; 30; 42; 90; 91),
- eine Halterung (11; 35) zur Aufnahme und zum Fixieren eines zu bearbeitenden Werkstückes (21; 33),
- eine Steuerung (60; 70) zum Erzeugen einer Relativbewegung der Schleifscheibe (18; 41; 80) bezüglich des zu bearbeitenden Werkstückes (21; 33), um mit der Schleifscheibe (18; 41; 80) an dem Werkstück (21; 33) einen Profilschleifvorgang durchführen zu können,
wobei durch das Softwaremodul die Abrichtscheibe (20; 30; 42; 90; 91) derart ansteuerbar ist, dass eine Relativbewegung der Abrichtscheibe (20; 30; 42; 90; 91) bezüglich der Schleifscheibe (18; 41; 80) ausgeführt wird, um zeitgleich zu dem Profilschleifvorgang mit der Abrichtscheibe (20; 30; 42; 90; 91) an der Schleifscheibe (18; 41; 80) einen Abrichtvorgang durchzuführen, und **dadurch gekennzeichnet dass** das Softwaremodul ein Korrekturmodul (62; 71) umfasst, das es ermöglicht Profilungenauigkeiten am Profil des Werkstückes (21; 33) zu beheben, die während dem Abrichtvorgang entstanden sind.

13. Das Softwaremodul nach Anspruch 12, wobei das Korrekturmodul (62; 71) die Durchführung mindestens eines der folgenden Korrekturverfahren ermöglicht:
- abschliessende Korrektur, die am Ende des Profilschleifvorgangs ausgeführt wird,
- intermittierende Korrektur,: die schrittweise zu verschiedenen Zeitpunkten während des Profilschleifvorganges ausgeführt wird,
- zeitgleiche Korrektur, die während dem Abrichtvorgang ausgeführt wird.

## Claims

1. System (10; 40) for profile grinding having a grinding spindle for rotatable mounting of a grinding disk (18; 41; 80; 80), a device for mounting a dressing tool (20; 30; 42; 90; 91) and having a retainer (11; 35) for receiving and fixing a workpiece (21; 33) to be machined, the system (10; 40) having means to allow a relative movement of the grinding disk (18; 41; 80) in relation to the workpiece (21; 33) to be machined, to be able to perform a profile grinding procedure on the workpiece (21; 33) using the grinding disk (18; 41; 80), the system (10; 40) having additional means to allow a relative movement of the dressing tool (20; 30; 42; 90; 91) in relation to the grinding disk (18; 41; 80), to be able to perform a dressing procedure on the grinding disk (18; 41; 80) using the dressing tool (20; 30; 42; 90; 91) concurrently with the profile grinding procedure, **characterized in that** the system (10; 40) comprises a software module (62; 71) to be able to perform one or more correction methods to reduce or entirely eliminate profile irregularities on the workpiece (21; 31) generated during the grinding machining and the simultaneous dressing procedure.

2. The system (10; 40) according to Claim 1, wherein the device for mounting comprises a slide, preferably a 2-axis slide, and/or a dressing spindle.

3. The system (10; 40) according to Claim 1 or 2, wherein the relative movement of the dressing tool (20; 30; 42; 90; 91) in relation to the grinding disk (18; 41; 80) is executed in such a manner that the grinding capability of the grinding disk (18; 41; 80) is improved during the dressing procedure.

4. The system (10; 40) according to Claim 2, wherein a dressing disk, which may be set into rotation via the dressing spindle at least during the dressing procedure, is used as the dressing tool (20; 42).

5. The system (10; 40) according to Claim 1, 2, or 4, wherein the system (10; 40) comprises a software-supported dressing controller (61; 70) which controls the relative movement of the dressing tool (20; 30; 42; 90; 91) in relation to the grinding disk (18; 41; 80).

6. The system (10; 40) according to one of the preceding claims, wherein the grinding disk (18; 41; 80) allows internal and/or external machining of the workpiece (21; 33) to be machined.

7. Profile grinding system for machining external and/or internal teeth, **characterized in that** it comprises a system (10; 40) according to one of Claims 1 through 5.

8. The profile grinding system according to Claim 7, **characterized in that** it is designed for shape grinding of gear wheels and/or worms.

9. Method for profile grinding with the following steps:
- driving a grinding disk (18; 41; 80) to set it into a rotational movement,
- displacing the grinding disk (18; 41; 80) in relation to a workpiece (21; 33) to be machined to bring the grinding disk (18; 41; 80) into contact with the workpiece (21; 33),
- controlling the relative movement of the grinding disk (18; 41; 80) in relation to the workpiece (21; 33) to execute a profile grinding procedure,
- driving a dressing disk (20; 30; 42; 90; 91) to set it into a rotational movement,
- displacing the dressing disk (20; 30; 42; 90; 91) in relation to the grinding disk (18; 41; 80) to bring the dressing disk (20; 30; 42; 90; 91) into contact with the grinding disk (18; 41; 80),
- controlling the relative movement of the dressing disk (20; 30; 42; 90; 91) in relation to the grinding disk (18; 41; 80) to execute a dressing procedure during the profile grinding procedure, **characterized by** a correction method which is performed to remedy profile irregularities on the profile of the workpiece (21; 33) which have arisen during the dressing procedure.

10. The method according to Claim 9, wherein at least one of the following correction methods is performed:
- terminating correction, which is executed at the end of the profile grinding procedure,
- intermittent correction, which is executed step-by-step at various times during the profile grinding procedure,
- concurrent correction, which is executed during the dressing procedure.

11. The method according to Claim 9 or 10, wherein the grinding capability of the grinding disk (18; 41; 80) is improved by the dressing procedure.

12. Software module for use in a system or with a system (10; 40) for profile grinding, the system (10; 40) comprising
- a rotatable grinding disk (18; 41; 80),
- a rotatable dressing disk (20; 30; 42; 90; 91),
- a retainer (11; 35) for receiving and fixing a workpiece (21; 33) to be machined,
- a controller (60; 70) for generating a relative movement of the grinding disk (18; 41; 80) in relation to the workpiece (21; 33) to be machined to be able to perform a profile grinding procedure on the workpiece (21; 33) using the grinding disk (18; 41; 80),
the dressing disk (20; 30; 42; 90; 91) being controllable by the software module in such a manner that a relative movement of the dressing disk (20; 30; 42; 90; 91) is executed in relation to the grinding disk (18; 41; 80), to perform a dressing procedure using the dressing disk (20; 30; 42; 90; 91) on the grinding disk (18; 41; 80) concurrently with the profile grinding procedure, and **characterized in that** the software module comprises a correction module (62; 71) which allows profile irregularities which have arisen on the profile of the workpiece (21; 33)during the dressing procedure to be remedied.

13. The software module according to Claim 12, wherein the correction module (62; 71) allows at least one of the following correction methods to be performed:
- terminating correction, which is executed at the end of the profile grinding procedure,
- intermittent correction, which is executed step-by-step at various times during the profile grinding procedure,
- concurrent correction, which is executed during the dressing procedure.

## Revendications

1. Système (10 ; 40) de rectification de profil avec une broche de rectification permettant de loger de façon pivotante un disque de rectification (18 ; 41 ; 80), un dispositif pour loger l'outil de dressage (20 ; 30 ; 42 ; 90 ; 91) et une monture (11 ; 35) destinée à loger et à fixer une pièce à usiner (21 ; 33), le système (10 ; 40) présentant des moyens pour permettre un déplacement relatif du disque de rectification (18 ; 41 ; 80) par rapport à la pièce à usiner (21 ; 33), afin de pouvoir réaliser sur la pièce (21 ; 33), avec le disque de rectification (18 ; 41 ; 80), un processus de rectification de profil, le système (10 ; 40) présentant des moyens supplémentaires pour permettre un déplacement relatif de l'outil de dressage (20 ; 30 ; 42 ; 90 ; 91) par rapport au disque de rectification (18 ; 41 ; 80), afin de pouvoir exécuter sur le disque de rectification (18 ; 41 ; 80), en même temps que le processus de rectification de profil, avec l'outil de dressage (20 ; 30 ; 42 ; 90 ; 91), un processus de dressage,
**caractérisé en ce que** le système (10 ; 40) comprend un module logiciel (62 ; 71) pour pouvoir réaliser un ou plusieurs procédés de correction afin de réduire ou d'éliminer totalement pendant le processus d'usinage et le processus de dressage simultané des imprécisions de profil générées au niveau de la pièce (21 ; 33).

2. Système (10 ; 40) selon la revendication 1, dans lequel le dispositif comprend pour le logement un coulisseau, de préférence un coulisseau à deux axes, et/ou une broche de dressage.

3. Système (10 ; 40) selon la revendication 1 ou 2, dans lequel le déplacement relatif de l'outil de dressage (20 ; 30 ; 42 ; 90 ; 91) par rapport au disque de rectification (18 ; 41 ; 80) est exécuté de façon telle que, pendant le processus de dressage, l'aptitude à la rectification du disque de rectification (18 ; 41 ; 80) est améliorée.

4. Système (10 ; 40) selon la revendication 2, dans lequel on utilise en tant qu'outil de dressage (20 ; 42) un disque de dressage qui peut être déplacé en rotation via la broche de dressage au moins pendant le processus de dressage.

5. Système (10 ; 40) selon la revendication 1, 2 ou 4, dans lequel le système (10 ; 40) comprend une commande de dressage (61 ; 70) assistée par ordinateur, qui commande le déplacement relatif de l'outil de dressage (20 ; 30 ; 42 ; 90 ; 91) par rapport au disque de rectification (18 ; 41 ; 80).

6. Système (10 ; 40) selon l'une des revendications précédentes, dans lequel le disque de rectification (18 ; 41 ; 80) permet un usinage interne et/ou externe de la pièce à usiner (21 ; 33).

7. Système de rectification de profil destiné à usiner des dentures externes et/ou internes, **caractérisé en ce qu'**il comprend un système (10 ; 40) selon l'une des revendications 1 à 5.

8. Système de rectification de profil selon la revendication 7,
**caractérisé en ce qu'**il est exécuté pour rectifier des roues dentées et/ou des vis sans fin.

9. Procédé de rectification de profil comportant les étapes suivantes :
- entraînement d'un disque de rectification (18 ; 41 ; 80) pour déplacer celui-ci selon un déplacement de rotation,
- déplacement du disque de rectification (18 ; 41 ; 80) par rapport à une pièce à usiner (21 ; 33), pour mettre en contact le disque de rectification (18 ; 41 ; 80) avec la pièce (21 ; 33),
- commande du déplacement relatif du disque de rectification (18 ; 41 ; 80) par rapport à la pièce (21 ; 33) pour exécuter un processus de rectification de profil,
- entraînement d'un disque de dressage (20 ; 30 ; 42 ; 90 ; 91) pour déplacer celui-ci selon un mouvement de rotation,
- déplacement du disque de dressage (20 ; 30 ; 42 ; 90 ; 91) par rapport au disque de rectification (18 ; 41 ; 80) pour amener en contact le disque de dressage (20 ; 30 ; 42 ; 90 ; 91) avec le disque de rectification (18 ; 41 ; 80),
- commande du déplacement relatif du disque de dressage (20 ; 30 ; 42 ; 90 ; 91) par rapport au disque de rectification (18 ; 41 ; 80), afin d'exécuter pendant le processus de rectification un processus de dressage,
**caractérisé en ce qu'**un procédé de correction est réalisé pour éliminer les imprécisions de profil qui se forment pendant le processus de dressage au niveau du profil de la pièce (21 ; 33).

10. Procédé selon la revendication 9, dans lequel au moins un des procédés de correction suivants est réalisé :
- correction de clôture, qui est exécutée à la fin du processus de rectification de profil,
- correction intermittente, qui est exécutée par étapes à différents moments pendant le processus de rectification de profil,
- correction chronique, qui est exécutée pendant le processus de dressage.

11. Procédé selon la revendication 9 ou 10, dans lequel, par le processus de dressage, on améliore l'aptitude à la rectification du disque de rectification (18 ; 41 ; 80).

12. Module logiciel destiné à une utilisation dans un système ou avec un système (10 ; 40) de rectification de profil, dans lequel le système (10 ; 40) comprend ;
- un disque de rectification pivotant (18 ; 41 ; 80),
- un disque de dressage pivotant (20 ; 30 ; 42 ; 90 ; 91),
- un support (11 ; 35) permettant de loger et de fixer une pièce à usiner (21 ; 33),
- une commande (60 ; 70) permettant de générer un déplacement relatif du disque de rectification (18 ; 41 ; 80) par rapport à la pièce à usiner (21 ; 33), afin de pouvoir réaliser, avec le disque de rectification (18 ; 41 ; 80), un processus de rectification sur la pièce (21 ; 33),
dans lequel, par le module logiciel, le disque de dressage (20 ; 30 ; 42 ; 90 ; 91) peut être commandé de façon telle qu'un déplacement relatif du disque de dressage (20 ; 30 ; 42 ; 90 ; 91) par rapport au disque de rectification (18 ; 41 ; 80) est exécuté, afin de réaliser simultanément au processus de rectification de profil, avec le disque de dressage (20 ; 30 ; 42 ; 90 ; 91), un processus de dressage sur le disque de rectification (18 ; 41 ; 80), et **caractérisé en ce que** le module logiciel comprend un module de correction (62 ; 71) qui permet d'éliminer les imprécisions de profil qui se forment pendant le processus de dressage sur la pièce (21 ; 33).

13. Module logiciel selon la revendication 12, dans lequel le module de correction (62 ; 71) permet la réalisation d'au moins un des procédés de correction suivants :
- correction de clôture, qui est exécutée à la fin du processus de rectification de profil,
- correction intermittente, qui est exécutée par étapes à différents moments pendant le processus de rectification de profil,
- correction chronique, qui est exécutée pendant le processus de dressage.
